# EUROPEAN PATENT APPLICATION

(11) **EP 2 458 826 A2**
(43) Date of publication of application: **30.05.2012**
(21) Application number: 11186359.3
(22) Date of filing: 24.10.2011
(51) Int. Cl.: H04L 29/12

(54) **Method for managing distinct IP addresses in a system and related system**

(30) Priority: 30.11.2010 TW 099141627
(71) Applicant: Acer Incorporated, New Taipei City 221 (TW)
(72) Inventor: Tseng, Wei-Chia, 221 New Taipei City (TW)
(74) Representative: Becker Kurig Straus

(57) **Abstract**

Logic performing unit acquires the IP addresses of operating systems and embedded management devices in network, and directly acquires a predetermined parameter from each embedded management device. Next, a reference value associated with the predetermined parameter is acquired by logic performing unit through the embedded management device's driver on the operating system under management, or the respective predetermined parameters are mounted onto respective embedded management device's virtual device by logic performing unit. If the predetermined parameter directly acquired from a specific embedded management device matches the reference value acquired through an embedded management device's driver on a specific operating system or if the predetermined parameter directly acquired from a specific embedded management device can be found in a specific operating system, logic performing unit can know a certain embedded management device and a certain operating system are on the same platform.

## Description

### Field of the Invention

The present invention is related to methods for managing distinct IP addresses in a system and related systems according to the pre-characterizing clauses of claims 1, 4, 7 and 10.

### Background of the Invention

IPMI (Intelligent Platform Management Interface) specification is a standard which defines communication between embedded systems, so that management software from different manufacturers may be performed on different types of firmware and hardware platforms, thereby reducing overall costs of a server system. An IPMI server can provide remote monitoring, system management, error diagnosis and system recovery, regardless of working status or type of operating system and CPU.

An IPMI application system normally includes a plurality of platforms capable of communicating with each other via a network. Embedded management devices may be installed in some platforms for improving system management ability. In a network environment, an embedded management device and an operating system installed in each platform have separate IP addresses. If a specific embedded management device is installed in a specific platform, two nodes associated with two IP addresses may be acquired when searching the network using ordinary management software. One node is associated with the IP address of the specific embedded management device, while the other node is associated with the IP address of the operating system installed in the specific platform. Unable to determine whether these two nodes correspond to the same platform, the prior art method may fail to describe the actual operational structure of the system.

Some prior art methods may use agents in order to determine the IP address of the operating system installed in a platform. Although the installation of agents can properly describe the actual operation of the application system, design of the agents may be time- and effort-consuming since the agents need to be tailor-made for each specific operating system and specific application. If the system is updated or modified, the agents also need to be modified. On the other hand, the agent is a software component which needs to be executed by a host device (such as a server). Extra resources required for executing the agents may influence overall system performance.

### Summary of the Invention

This in mind, the present invention aims at providing a method for managing distinct IP addresses in a system and a related system.

This is achieved by methods for managing distinct IP addresses in a system according to claims 1 and 4 and systems capable of managing distinct IP addresses according to claims 7 and 10. The dependent claims pertain to corresponding further developments and improvements.

As will be seen more clearly from the detailed description following below, the claimed method for managing distinct IP addresses in a system includes acquiring IP addresses of all operating systems and embedded management devices installed in all platforms of the system; acquiring a predetermined parameter directly from each embedded management device; acquiring a reference value associated with the predetermined parameter via an operating system installed in each platform under management; and determining that a specific operating system and a specific embedded management device have IP addresses corresponding to a same platform if a specific predetermined parameter directly acquired from the specific embedded management device matches a specific reference value acquired via a specific operating system installed in the specific platform.

As will be seen more clearly from the detailed description following below, the claimed method for managing distinct IP addresses in a system includes acquiring IP addresses of all operating systems and embedded management devices installed in all platforms of the system; acquiring a predetermined parameter directly from each embedded management device; activating a virtual device of each embedded management device and mounting the predetermined parameter of each embedded management device onto its corresponding virtual device; searching in the operating systems installed in all platforms of the system for all predetermined parameters; and determining that a specific operating system and a specific embedded management device have IP addresses corresponding to a same platform if a specific predetermined parameter directly acquired from the specific embedded management device is found in a specific operating system installed in the specific platform.

As will be seen more clearly from the detailed description following below, the claimed system capable of managing distinct IP addresses includes a plurality of platforms having distinct IP addresses; an embedded management device installed in a corresponding platform among the plurality of platforms; a logic performing unit configured to acquire IP addresses of all operating systems and embedded management devices installed in all platforms of the system, acquire a predetermined parameter directly from the embedded management device, acquire a reference value associated with the predetermined parameter via an operating system installed in each platform under management, and determine that a specific operating system and the embedded management device have IP addresses corresponding to a same platform if the predetermined parameter matches a specific reference value acquired via the specific operating system installed in the corresponding platform.

As will be seen more clearly from the detailed description following below, the claimed system capable of managing distinct IP addresses includes a plurality of platforms having distinct IP addresses; an embedded management device installed in a corresponding platform among the plurality of platforms and providing a virtual device; a logic performing unit configured to acquire IP addresses of all operating systems and embedded management devices installed in all platforms of the system, acquire a predetermined parameter directly from the embedded management device, activate the virtual device of the embedded management device, mount the predetermined parameter onto the virtual device, search in each operating system installed in each platform of the system for the predetermined parameter, and determine that a specific operating system and the embedded management device have IP addresses corresponding to a same platform if the predetermined parameter is found in the specific operating system installed in the corresponding platform.

### Brief Description of the Drawings

In the following, the invention is further illustrated by way of example, taking reference to the accompanying drawings. Thereof
FIG. 1 is a diagram of a prior art application system using agents for management;
FIG. 2 is a diagram of an application system according to the present invention;
FIG. 3 is a flowchart illustrating a method for managing distinct IP addresses in the application system according to the present invention; and
FIG. 4 is a flowchart illustrating a method for managing distinct IP addresses in the application system according to the present invention.

### Detailed Description

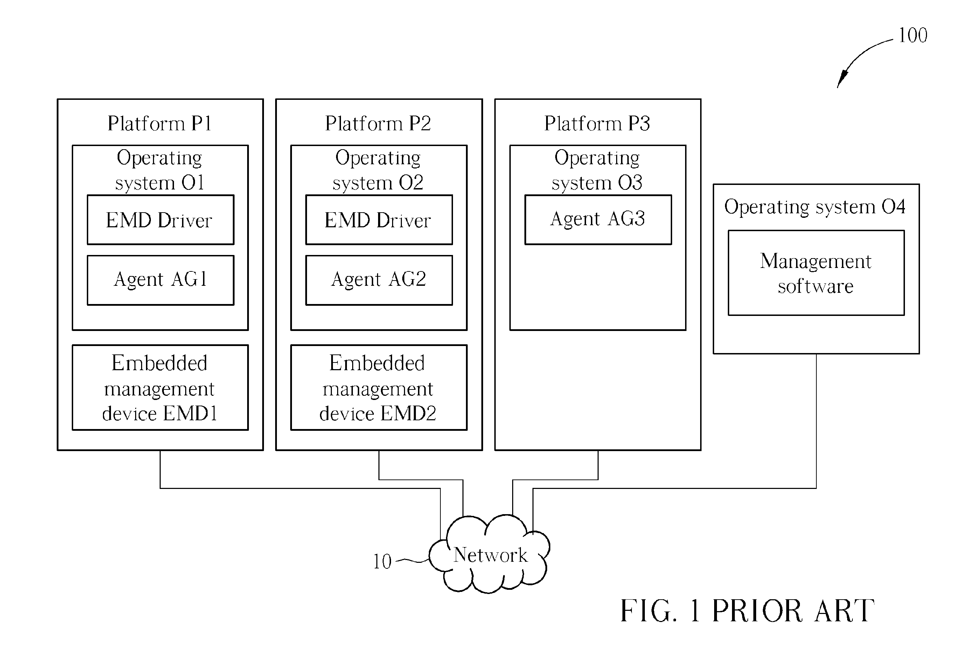

FIG. 1 is a diagram of a prior art application system 100 using agents for management. The prior art application system 100 includes a network 10 and platforms P1-P3. A user may manage the platforms P1-P3 using management software in an operating system 04. The platform P1 is installed with an embedded management device EMD1 and an operating system 01 which provides an EMD driver required for operating the embedded management device EMD1. The platform P2 is installed with an embedded management device EMD2 and an operating system 02 which provides an EMD driver required for operating the embedded management device EMD2. The platform P3 is installed with an operating system 03, but no embedded management device. Upon receiving user commands, the management software of the operating system 04 may install agents AG1-AG3 in the operating systems 01-03 under management, respectively. By acquiring information of the operating systems 01-03 under management and the hardware information of the corresponding platforms P1-P3 using the agents AG1-AG3, the management software of the operating system 04 associates the IP address of a specific platform as a node, which is then used to represent the operating system and hardware equipment in the specific platform. Therefore, the actual operational structure of the application system 100 may be properly described.

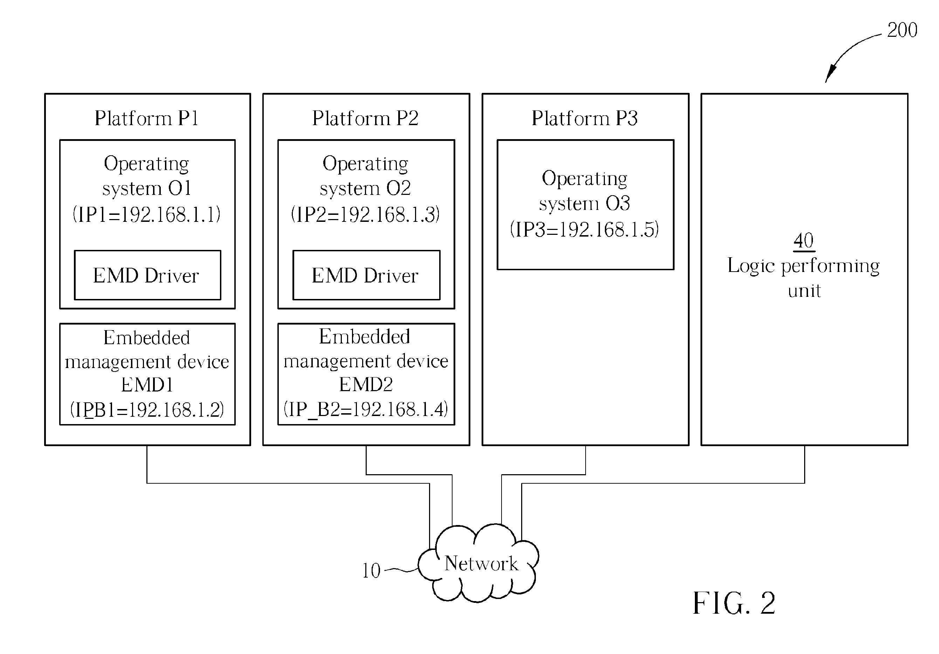

FIG. 2 is a diagram of an application system 200 according to the present invention. The application system 200 includes a network 10, platforms P1-P3 and a logic performing unit 40. The platforms P1-P3 are systems under management and may communicate with the logic unit 40 via the network 10. The platform P1 is installed with an embedded management device EMD1 and an operating system 01 which provides an EMD driver required for operating the embedded management device EMD1. The platform P2 is installed with an embedded management device EMD2 and an operating system 02 which provides an EMD driver required for operating the embedded management device EMD2. The platform P3 is installed with an operating system 03, but no embedded management device.

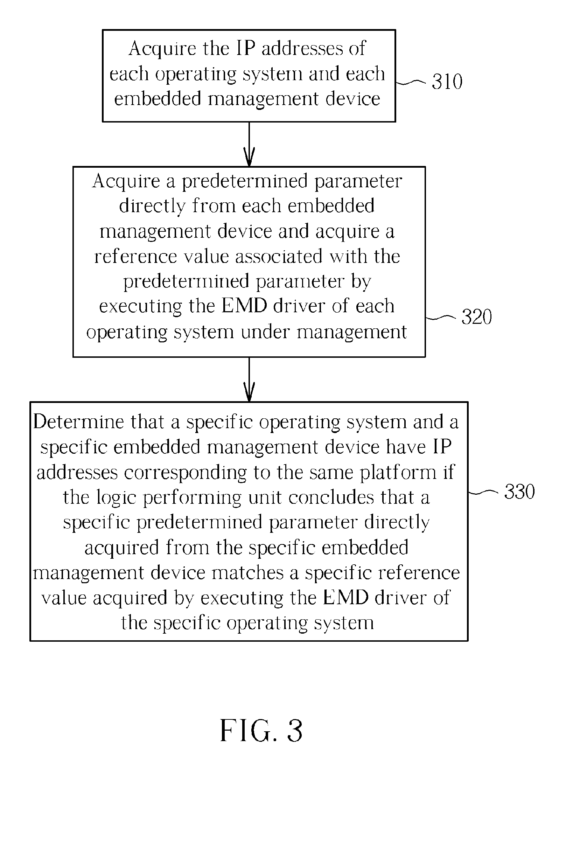

FIG. 3 is a flowchart illustrating a method for managing distinct IP addresses in the application system 200 according to a first embodiment of the present invention. The flowchart in FIG. 3 includes the following steps:
- Step 310:: acquire the IP addresses of each operating system and each embedded management device by searching the network using the logic performing unit.
- Step 320:: acquire a predetermined parameter directly from each embedded management device using the logic performing unit, and acquire a reference value associated with the predetermined parameter by executing the EMD driver of each operating system under management.
- Step 330:: determine that a specific operating system and a specific embedded management device have IP addresses corresponding to the same platform if the logic performing unit concludes that a specific predetermined parameter directly acquired from the specific embedded management device matches a specific reference value acquired by executing the EMD driver of the specific operating system.

In step 310 according to the first embodiment of the present invention, the logic performing unit 40 is configured to acquire the IP addresses of all devices by searching the network 10. For example, assuming that the operating system 01 has an IP address IP1 (192.168.1.1), the operating system 02 has an IP address IP2 (192.168.1.3), the operating system 03 has an IP address IP3 (192.168.1.5), the embedded management device EMD1 has an IP address IP_B1 (192.168.1.2), and the embedded management device EMD2 has an IP address IP_B2 (192.168.1.4) in the application system 200, at least five IP addresses IP1-IP5 may be acquired in step 310.

In step 320, the logic performing unit 40 is configured to acquire the predetermined parameter directly from each embedded management device. The predetermined parameter may be any item based on which the embedded management devices are distinguishable from each other. In the first embodiment of the present invention, MAC (Media Access Control) address is used as the predetermined parameter, but only for illustrative purposes. Therefore, a MAC address MAC1 of the embedded management device EMD1 and a MAC address MAC2 of the embedded management device EMD2 may be acquired in step 320.

In step 320, the logic performing unit 40 is also configured to acquire the reference value associated with the predetermined parameter by executing the EMD driver of each operating system under management. For example, since the platform P1 is installed with the embedded management device EMD1 and the operating system 01 which provides the EMD driver required for operating the embedded management device EMD1, the reference value associated with the predetermined parameter, such as a reference value MAC1' associated with the MAC address MAC1 of the embedded management device EMD1, may be acquired. Since the platform P2 is installed with the embedded management device EMD2 and the operating system 02 which provides the EMD driver required for operating the embedded management device EMD2, the reference value associated with the predetermined parameter, such as a reference value MAC2' associated with the MAC address MAC2 of the embedded management device EMD2, may be acquired. Since the platform P3 is not installed with any embedded management device, no reference value associated with the predetermined parameter may be acquired.

In step 330, the logic performing unit 40 is configured to compare the values of MAC1, MAC1', MAC2 and MAC2', thereby concluding MAC=MAC1' and MAC2=MAC2' (MAC1≠MAC2). Therefore, it can be determined that the embedded management device EMD1 and the operating system 01 are installed on the same platform P1, while the embedded management device EMD2 and the operating system 02 are installed on the same platform P2. In other words, IP1 (192.168.1.1) and IP_B1 (192.168.1.2) correspond to the same platform, while IP2 (192.168.1.3) and IP_B2 (192.168.1.4) correspond to the same platform.

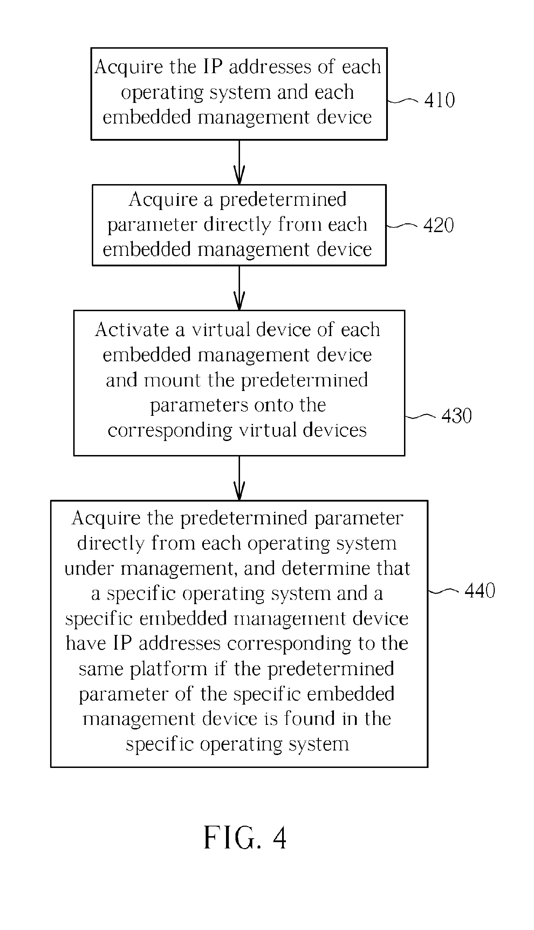

FIG. 4 is a flowchart illustrating a method for managing distinct IP addresses in the application system 200 according to a second embodiment of the present invention. The flowchart in FIG. 4 includes the following steps:
- Step 410:: acquire the IP addresses of each operating system and each embedded management device by searching the network using the logic performing unit.
- Step 420:: acquire a predetermined parameter directly from each embedded management device using the logic performing unit.
- Step 430:: activate a virtual device of each embedded management device and mount the predetermined parameters onto the corresponding virtual devices using the logic performing unit.
- Step 440:: acquire the predetermined parameter directly from each operating system under management using the logic performing unit, and determine that a specific operating system and a specific embedded management device have IP addresses corresponding to the same platform if the predetermined parameter of the specific embedded management device is found in the specific operating system.

In step 410 according the second embodiment of the present invention, the logic performing unit 40 is configured to acquire the IP addresses of all devices by searching the network 10. For example, assuming that the operating system 01 has an IP address IP1 (192.168.1.1), the operating system 02 has an IP address IP2 (192.168.1.3), the operating system 03 has an IP address IP3 (192.168.1.5), the embedded management device EMD1 has an IP address IP_B1 (192.168.1.2), and the embedded management device EMD2 has an IP address IP_B2 (192.168.1.4) in the application system 200, at least five IP addresses IP1-IP5 may be acquired in step 410.

In step 420, the logic performing unit 40 is configured to directly acquire the predetermined parameter from each embedded management device. The predetermined parameter may be any item based on which the embedded management devices are distinguishable from each other. In the second embodiment of the present invention, MAC address is used as the predetermined parameter, but only for illustrative purposes. Therefore, a MAC address MAC1 of the embedded management device EMD1 and a MAC address MAC2 of the embedded management device EMD2 may be acquired in step 420.

In step 430, the logic performing unit 40 is configured to activate the virtual device (such as a virtual storage device, a virtual optical disc, a virtual hard disc or other virtual devices) of each embedded management device and mount the predetermined parameters onto the corresponding virtual devices. In the second embodiment of the present invention, the virtual device is a virtual storage device, but only for illustrative purposes. Therefore, the predetermined parameter MAC1 may be mounted onto the virtual storage device of the embedded management device EMD1, while the predetermined parameter MAC2 may be mounted onto the virtual storage device of the embedded management device EMD2.

In step 440, the logic performing unit 40 is configured to search all predetermined parameters in the storage device of each operating system under management. For example, the logic performing unit 40 may search the storage devices of the operating systems 01-03 for the MAC addresses MAC1 and MAC2. As a result, the MAC address MAC1 can be found in the storage device of the operating system 01, the MAC address MAC2 can be found in the storage device of the operating system 02, and no predetermined parameter can be found in the storage device of the operating system 03. Therefore, it can be determined that IP1 (192.168.1.1) and IP_B1 (192.168.1.2) correspond to the same platform, while IP2 (192.168.1.3) and IP_B2 (192.168.1.4) correspond to the same platform.

In the previously illustrated embodiments, the platforms P1-P4 may be servers in the IPMI system, and the embedded management devices EMD1 and EMD2 may be BMCs (Baseboard Management Controllers) installed in the servers. The BMCs allow system administrators to manage the entire system via respective interfaces, such as system status monitoring, event filtering, power management, event time recording and system recovery control, as well as informing the system administrators via the network or serial port. In a network environment, each BMC and the operating system of each server have separate IP addresses. As illustrated in FIGs. 3 and 4, the present invention can manage distinct IP addresses in the application system with or without using agents, thereby describing the actual operation of the application system properly.

The present invention may be applied to different IPMI systems, such as Intel vPro platform, which includes 6 major components: Intel AMT (Intel Active Management Technology), Intel VT (Intel Virtualization Technology), Intel ME (Intel Management Engine), VT-based Intel CPU, VT-based Intel chipset, and Intel network chip. Intel AMT provides out-of-band management, wireless interface, NAC (Network Access Control), power packages, UNS (User Notification Service), and network environment tests which allow system recovery during malfunction or shut-off. Intel ME is an embedded device of Intel vPro platform and has a different IP address from the operating system. As illustrated in FIGs. 3 and 4, the present invention can manage distinct IP addresses in Intel vPro platform with or without using agents, thereby describing the actual operation of Intel vPro platform properly.

The BMC and Intel ME are examples of the embedded management devices, but do not limit the scope of the present invention. The present invention may be applied to any type of embedded management device having a distinct IP address.

In conclusion, the present invention can determine the relationship between each embedded management device and operating system in an application system, thereby describing the actual operation of the application system properly.

## Claims

1. A method for managing distinct IP addresses in a system (200), comprising:
acquiring IP addresses of all operating systems and embedded management devices installed in all platforms of the system (200);
**characterized by**:
acquiring a predetermined parameter directly from each embedded management device;
acquiring a reference value associated with the predetermined parameter via an operating system installed in each platform under management; and
determining that a specific operating system and a specific embedded management device have IP addresses corresponding to a same platform if a specific predetermined parameter directly acquired from the specific embedded management device matches a specific reference value acquired via a specific operating system installed in the specific platform.

2. The method of claim 1, **characterized in that** each embedded management device is distinguishable by its predetermined parameter.

3. The method of claim 1, **characterized in that** the predetermined parameter is a media access control address or an IP address.

4. A method for managing distinct IP addresses in a system (200), comprising:
acquiring IP addresses of all operating systems and embedded management devices installed in all platforms of the system;
**characterized by**:
acquiring a predetermined parameter directly from each embedded management device;
activating a virtual device of each embedded management device and mounting the predetermined parameter of each embedded management device onto its corresponding virtual device;
searching in the operating systems installed in all platforms of the system for all predetermined parameters; and
determining that a specific operating system and a specific embedded management device have IP addresses corresponding to a same platform if a specific predetermined parameter directly acquired from the specific embedded management device is found in a specific operating system installed in the specific platform.

5. The method of claim 4, further **characterized in that** each embedded management device is distinguishable by its predetermined parameter.

6. The method of claim 5, further **characterized in that** the predetermined parameter is a media access control address or an IP address.

7. A system capable of managing distinct IP addresses, comprising:
a plurality of platforms having distinct IP addresses;
an embedded management device installed in a corresponding platform among the plurality of platforms;
**characterized by**:
a logic performing unit configured to acquire IP addresses of all operating systems and embedded management devices installed in all platforms of the system, acquire a predetermined parameter directly from the embedded management device, acquire a reference value associated with the predetermined parameter via an operating system installed in each platform under management, and determine that a specific operating system and the embedded management device have IP addresses corresponding to a same platform if the predetermined parameter matches a specific reference value acquired via the specific operating system installed in the corresponding platform.

8. The system of claim 7, further **characterized in that** the embedded management device includes a baseboard management controller or an Intel management engine.

9. The system of claim 7, further **characterized in that** the logic performing unit includes an executable program or a program code.

10. A system capable of managing distinct IP addresses, comprising:
a plurality of platforms having distinct IP addresses;
an embedded management device installed in a corresponding platform among the plurality of platforms and providing a virtual device;
**characterized by**:
a logic performing unit configured to acquire IP addresses of all operating systems and embedded management devices installed in all platforms of the system, acquire a predetermined parameter directly from the embedded management device, activate the virtual device of the embedded management device, mount the predetermined parameter onto the virtual device, search in each operating system installed in each platform of the system for the predetermined parameter, and determine that a specific operating system and the embedded management device have IP addresses corresponding to a same platform if the predetermined parameter is found in the specific operating system installed in the corresponding platform.

11. The system of claim 11, **characterized in that** the embedded management device includes a baseboard management controller or an Intel management engine.

12. The system of claim 10, **characterized in that** the virtual device is an operating system mounted onto the corresponding platform.

13. The system of claim 10, **characterized in that** the virtual device is a virtual storage device, a virtual optical disc or a virtual hard disc.

14. The system of claim 10, **characterized in that** the logic performing unit includes an executable program or a program code.
